# EUROPEAN PATENT APPLICATION

(11) **EP 2 845 668 A1**
(43) Date of publication of application: **11.03.2015**
(21) Application number: 13275199.1
(22) Date of filing: 04.09.2013
(51) Int. Cl.: B22F 3/105, B22F 5/10, B29C 67/00, F16L 9/19

(54) **Conduit system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed are a method and apparatus for producing a conduit system (10) for use onboard a vehicle (3). The method comprises: identifying a plurality of source apparatuses (4) located onboard the vehicle (3) and from which a resource is to be transferred via the conduit system (10); for each identified source apparatus (4), identifying one or more sink apparatuses (6) located onboard the vehicle (3) and to which that source apparatus (4) is to transfer, via the conduit system (10), a resource; using relative locations of the identified source and sink apparatuses, producing a digital model (62) for the conduit system (10) including specifying conduits (12-24) for coupling the source apparatuses (4) to the sink apparatuses (6) and arranging the conduits (12-24) such that each conduit (12-24) shares a common conduit wall with at one other conduit (12-24); and, using the digital model (62), producing the conduit system (10).

## Description

### FIELD OF THE INVENTION

The present invention relates to conduit systems and the manufacturing thereof.

### BACKGROUND

Additive Manufacturing (AM) (also known as Additive Layer Manufacture (ALM), 3D printing, etc.) is a process that may be used to produce functional, complex objects, layer by layer, without moulds or dies. Typically, such processes include providing material (e.g. metal or plastic) in the form of a powder or a wire, and, using a powerful heat source such as a laser beam, electron beam or an electric, or plasma welding arc, melting an amount of that material and depositing the melted material (e.g. on a base plate of a work piece). Subsequent layers are then built up upon each preceding layer.

Example AM processes include, but are not limited to, Laser Blown Powder, Laser Powder Bed, and Wire and Arc technologies.

In a separate field, in many vehicles, conduits, for example pipes or tubes, are used to convey fluids, such as fuel or a coolant, from a source apparatus to sink apparatus which utilises the received fluid. Conduits between apparatuses may also be used to contain hydraulic fluid for transferring power between the apparatuses. Conduits between apparatuses may also be used to house, for example, electric wiring or cables or optical fibres that connect that apparatus.

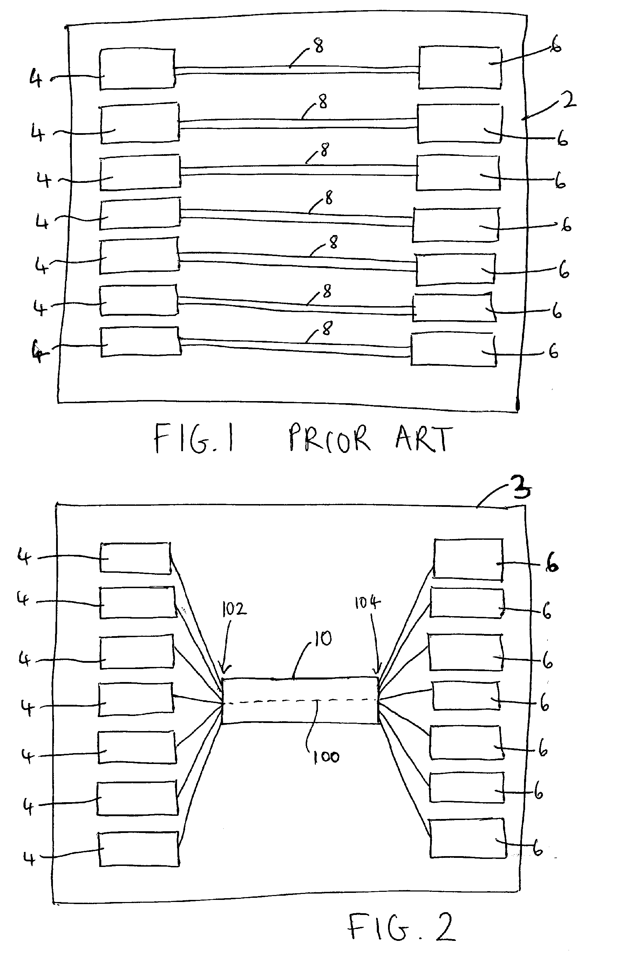

Figure 1 is a schematic illustration (not to scale) showing an example conventional aircraft, hereinafter referred to as the "first aircraft" and indicated by the reference numeral 2.

The first aircraft 2 comprises a plurality of source apparatuses 4, each of which is coupled to a respective sink apparatus 6 by a respective conduit 8.

Example source apparatuses 4, sink apparatuses 6, and conduits 8 include, but are not limited to:
a fuel tank containing fuel which is delivered to an aircraft engine via a fuel pipeline;
a fuel reservoir from which fuel is delivered to a fuel tank via a vent line;
a hydraulic input which is connected to an actuator for a flight control surface by a conduit containing hydraulic fluid such that power may be transferred from the hydraulic input to the actuator; and
a sensor which is connected to a computer via a conduit that houses electrical wiring or optical fibre such that measured sensor data may be sent from the sensor to the computer via the electrical wiring or optical fibre.

In the first aircraft 2, many of the conduits 8 run along at least part of the length of the first aircraft 2, i.e. in a direction parallel to a longitudinal axis of the first aircraft 2. For example, some or all of the conduits 8 run along a "spine" of the first aircraft 2.

Typically, during manufacture or assembly of the first aircraft 2, each individual conduit 8 is fabricated and/or assembled, and installed into the aircraft 100 independently of the other conduits 8. Attachment means such as P-clips or fairleads for installing a conduit 8 into the first aircraft 2 may also be produced independently of other attachment means for installing different conduits 8 into the first aircraft 2.

A conduit 8 may be installed into the first aircraft 2 by attaching that conduit 8 to, for example, the fuselage of the first aircraft 2 at multiple attachment points along the length of that conduit 8. The attachment means that attaches a conduit 8 to the fuselage at multiple attachment points tends to occupy a significant volumetric space onboard the first aircraft 2.

Furthermore, conventionally, space surrounding each conduit 8 is provided to allow access to that conduit 8, for example, to facilitate installation, replacement or repair of that conduit 8.

The production the individual conduits 8, and the installation of said conduits into the first aircraft 2, tend to be time consuming and expensive at least in part due to the significant number of manufacturing and installation steps involved.

### SUMMARY OF THE INVENTION

In a first aspect, the present invention provides a method of producing a conduit system for use onboard a vehicle, the method comprising: identifying a plurality of source apparatuses, each source apparatus being apparatus from which a respective resource is to be transferred via the conduit system, each source apparatus being located onboard the vehicle; for each identified source apparatus, identifying one or more sink apparatuses to which that source apparatus is to be coupled via the conduit system such that a resource may be transferred via the conduit system from that source apparatus to those one or more sink apparatuses, each sink apparatus being located onboard the vehicle; using relative locations of the identified source and sink apparatuses, producing a digital model for the conduit system, producing the digital model including: for each source apparatus, specifying a conduit for coupling that source apparatus to each of the one or more sink apparatuses to which that source apparatus is to be coupled; and arranging the conduits of the conduit system in a nested configuration such that at least part of each conduit of the conduit system shares a common conduit wall with at least part of at least one other conduit of the conduit system; and using the digital model, producing the conduit system.

The conduit system may be a single object.

The step of producing may comprise performing, by an Additive Manufacturing apparatus, an Additive Manufacturing process to manufacture the conduit system. The Additive Manufacturing process may be a powder bed fusion process. One or more of the conduits may include a valve or other structure (e.g. a flow separator) which may have been produced by the Additive Manufacturing apparatus during the Additive Manufacturing process.

The method may further comprise coupling the conduit system to the source apparatuses and the sink apparatuses such that, for each source apparatus, a resource may be transferred via the conduit system from that source apparatus to the one or more sink apparatuses coupled to that source apparatus.

The vehicle may be an aircraft and each of the source apparatuses and each of the sink apparatuses may be an aircraft system onboard the aircraft.

The conduit system may be such that the cross section of the conduit system satisfies a first predetermined criterion, for example, a criterion that the cross sectional area of the conduit system is minimised.

The conduit system may be such that the cross section of one or more of the conduits of the conduit system satisfies a second predetermined criterion, for example, a criterion that the cross section is a particular shape (e.g. a circle) or has a minimum or maximum size.

Producing the digital model may further include arranging the conduits such that heating of the contents of one conduit by the contents of a different conduit is minimised. Producing the digital model may further include arranging the conduits such that cooling of the contents of one conduit by the contents of a different conduit is minimised. Producing the digital model may further include arranging the conduits such that heating of the contents of one conduit by the contents of a different conduit is maximised. Producing the digital model may further include arranging the conduits such that cooling of the contents of one conduit by the contents of a different conduit is maximised.

Producing the digital model may further include arranging the conduits such that the cross sections of the conduits tessellate.

Each conduit of the conduit system may be selected from the group of conduits consisting of: a conduit configured to house electrical wiring via which an electrical signal may be sent from a source system to a sink system; a conduit configured to house an optical fibre via which an optical signal may be sent from a source system to a sink system; a conduit configured to contain hydraulic fluid for transferring power from a source system to a sink system; and a conduit configured to allow passage of a fluid from a source system to a sink system.

In a further aspect, the present invention provides apparatus for producing a conduit system for use onboard a vehicle, the apparatus comprising: one or more processors configured to: receive an identity of each of a plurality of source apparatuses, each source apparatus being apparatus from which a respective resource is to be transferred via the conduit system, each source apparatus being located onboard the vehicle; for each identified source apparatus, receive an identity of one or more sink apparatuses to which that source apparatus is to be coupled via the conduit system such that a resource may be transferred via the conduit system from that source apparatus to those one or more sink apparatuses, each sink apparatus being located onboard the vehicle; and, using relative locations of the identified source and sink apparatuses, producing a digital model for the conduit system, producing the digital model including: for each source apparatus, specifying a conduit for coupling that source apparatus to each of the one or more sink apparatuses to which that source apparatus is to be coupled; and arranging the conduits of the conduit system in a nested configuration such that at least part of each conduit of the conduit system shares a common conduit wall with at least part of at least one other conduit of the conduit system; and production means configured to, using the digital model, producing the conduit system.

In a further aspect, the present invention provides a vehicle conduit system comprising: a plurality of conduits, each conduit being for transferring a resource from one or more source apparatuses to one or more sink apparatuses; wherein the conduits of the conduit system are nested together such that at least part of each conduit of the conduit system shares a common conduit wall with at least part of at least one other conduit of the conduit system; and the conduit system is an object that has been produced by an Additive Manufacturing apparatus by performing an Additive Manufacturing process.

### BRIEF DESCRIPTION OF THE DRAWINGS

Figure 1 is a schematic illustration (not to scale) showing a first aircraft;
Figure 2 is a schematic illustration (not to scale) showing a second aircraft;
Figure 3 is a schematic illustration (not to scale) showing a cross section of a conduit system;
Figure 4 is a process flow chart showing certain steps of a process of designing and fabricating the conduit system; and
Figure 5 is a schematic illustration (not to scale) showing an example Additive Manufacturing apparatus.

### DETAILED DESCRIPTION

The terminology "source apparatus" is used herein to refer to a system or apparatus from which a resource, such as power, information, matter etc. is to be transferred.

The terminology "sink apparatus" is used herein to refer to a system or apparatus to which a resource, such as power, information, matter etc. is to be transferred.

The terminology "conduit" is used herein to refer to any duct, pipe, channel, pipeline, tube, canal, trough, piping, etc. that may be used to convey a resource from one location to a different location, for example, from a source apparatus to a sink apparatus. For example, a conduit may be used to transfer a fluid from one location to a different location, or may be used to house or guide a fluid (such as hydraulic fluid) or an elongate entity (such as electric wire or cable, or an optical fibre) between two different locations.

The terminology "Additive Manufacturing" is used herein to refer to all additive processes that may be used to produce functional, complex objects, layer by layer, without moulds or dies e.g. by providing material (e.g. metal or plastic) typically in the form of a powder or a wire, and, using a powerful heat source such as a laser beam, electron beam or an electric, or plasma welding arc, melting an amount of that material and depositing the melted material (e.g. on a base plate/work piece), and subsequently building layers of material upon each preceding layer.

Additive Manufacture (AM) may also be known *inter alia* as 3D printing, Direct Digital Manufacturing (DDM), Digital Manufacturing (DM), Additive Layer Manufacturing (ALM), Rapid Manufacturing (RM), Laser Engineering Net Shaping (LENS), Direct Metal Deposition, Direct Manufacturing, Electron Beam Melting, Laser Melting, Freeform Fabrication, Laser Cladding, Direct Metal Laser Sintering.

Figure 2 is a schematic illustration (not to scale) showing an example aircraft, hereinafter referred to as the "second aircraft" and indicated by the reference numeral 3, which will be used to illustrate an embodiment of a combined conduit system 10. The second aircraft 3 may be an unmanned aircraft.

In this embodiment, the second aircraft 3 comprises a plurality of source apparatuses 4. In this embodiment, each source apparatus 4 is connected to a respective sink apparatus 6 by the conduit system 10. Thus, whereas conventionally each source apparatus 4 tends to be connected to a sink apparatus 6 by an independent, separate conduit 8, in this embodiment, the source apparatuses 4 are connected to the sink apparatuses 6 by a common conduit system 10.

In this embodiment, the conduit system 10 is an elongate member having a longitudinal axis 100. In other embodiments, the conduit system 10 is not an elongate member.

In this embodiment, the conduit system 10 runs along at least part of the length of the second aircraft 3, i.e. the conduit system 10 is installed in the second aircraft 3 such that the longitudinal axis 100 of the conduit system 10 is substantially aligned with a longitudinal axis of the second aircraft 3. The conduit system 10 may run along a "spine" of the second aircraft 3. In some embodiments, the conduit system 10 is arranged onboard the second aircraft 3 in a different way, for example, such that the longitudinal axis 100 of the conduit system 10 is substantially aligned with a transverse axis of the second aircraft 3 (e.g. the conduit system 10 may run along a wing of the second aircraft 3).

In this embodiment, each of the plurality of source apparatuses 4 is coupled to the conduit system 10 at or proximate to a first end 102 of the conduit system 10. Also, each of the plurality of sink apparatuses 6 is coupled to the conduit system 10 at or proximate to a second end 104 of the conduit system 10, the second end 104 being an opposite end to the first end 102. However, in other embodiments one or more of the source apparatuses 4 and/or one or more of the sink apparatuses 6 may be coupled to the conduit system 10 in a different way. For example, a source apparatus 4 may be coupled to the second end 104 of the conduit system 10. This source apparatus 4 may be connected to a respective sink apparatus 6 (by the conduit system 10) which may be coupled to the conduit system 10 at or proximate to the first end 102 of the conduit system 10. In some embodiments, one or more of the source apparatuses 4 and/or sink apparatuses 6 are coupled to an intermediate portion of the conduit system 10, the intermediate portion being located somewhere between the first end 102 and the second end 104.

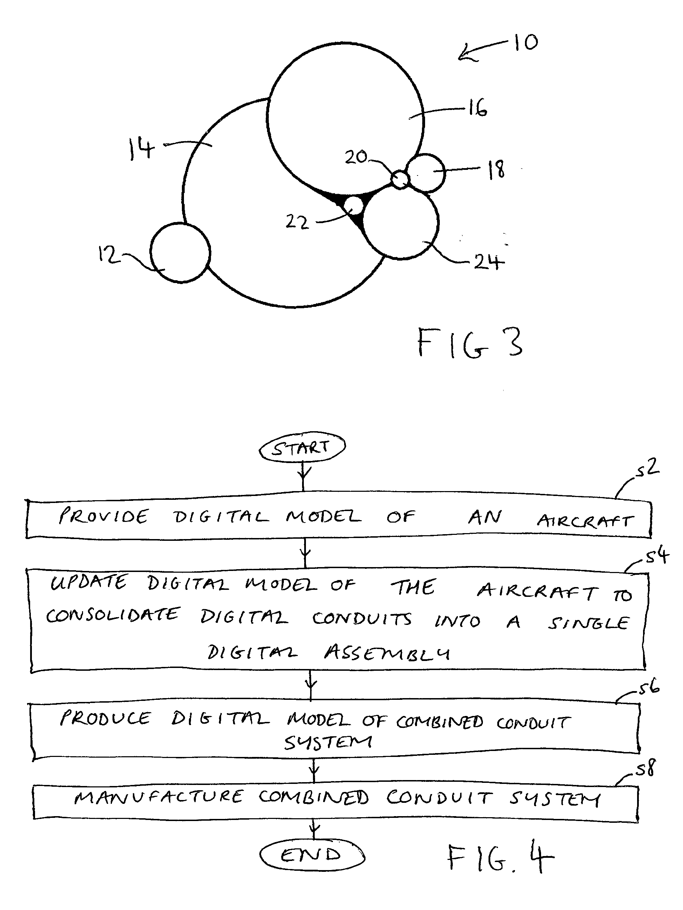

Figure 3 is a schematic illustration (not to scale) showing a cross section of the conduit system 10. The cross section shown in Figure 3 is a section formed by a plane cutting through the conduit system 10 perpendicularly to the longitudinal axis 100 of the conduit system 10.

In this embodiment, the conduit system 10 comprises seven conduits, namely a first conduit 12, a second conduit 14, a third conduit 16, a fourth conduit 18, a fifth conduit 20, a sixth conduit 22, and a seventh conduit 24.

In this embodiment, the conduits 12 - 24 of the conduit system 10 are separated by conduit walls such that fluid flow between different conduits 12 - 24 of the conduit system 10 is not permitted. However, in some embodiments, two or more the conduits 12 - 24 of the conduit system 10 may be connected such that fluid flow between those two or more the conduits 12 - 24 is permitted. In this embodiment, the conduits 12- 24 are arranged such that, at at least some point along its length, each conduit 12 - 24 shares conduit wall with at least one other conduit of the conduit system. In other words, each conduit 12- 24 has a conduit wall in common with at least one other conduit 12 - 24. In other words, the conduits 12 - 24 are "nested" together.

In this embodiment, each of the conduits 12 - 24 of the conduit system 10 couples together a respective source apparatus 4 and sink apparatus 6.

The first conduit 12 couples together a first source apparatus to a first sink apparatus. The first source apparatus is a power source, such as a battery or generator, onboard the second aircraft 3. The first sink apparatus is a computer onboard the second aircraft 3. In this embodiment, an electrical power wire runs along the first conduit 12 and electrically connects the first source apparatus to the first sink apparatus such that electrical power may be delivered by the first source apparatus to the first sink apparatus.

The second conduit 14 couples together a second source apparatus to a second sink apparatus. The second source apparatus is a cooling air intake of the second aircraft 3. The second sink apparatus is a fuel cooler, an air cooler or a computer onboard the second aircraft 3. In this embodiment, the second conduit 14 couples together the second source apparatus and the second sink apparatus such that cooling air flows through the second conduit 14 from the second source apparatus to the second sink apparatus.

The third conduit 16 couples together a third source apparatus to a third sink apparatus. The third source apparatus is a fuel tank or fuel system of the second aircraft 3. The first sink apparatus is an engine of the second aircraft 3. In this embodiment, the third conduit 16 couples together the third source apparatus and the third sink apparatus such that fuel flows through the third conduit 16 from the third source apparatus to the third sink apparatus.

The fourth conduit 18 couples together a fourth source apparatus to a fourth sink apparatus. The fourth source apparatus is a control system sensor onboard the second aircraft 3. The fourth sink apparatus is a computer onboard the second aircraft 3. In this embodiment, an electrical signal wire or optical fibre runs along the fourth conduit 18 and electrically or optically connects the fourth source apparatus to the fourth sink apparatus such that sensor data measured by the fourth source apparatus may be sent to the fourth sink apparatus.

The fifth conduit 20 couples together a fifth source apparatus to a fifth sink apparatus. The fifth source apparatus is a hydraulic input onboard the second aircraft 3. The fifth sink apparatus is a hydraulic actuator arranged to actuate, for example, a flight control surface or a landing gear of the second aircraft 3. In this embodiment, the fifth conduit 20 contains hydraulic fluid and couples together the fifth source apparatus and the fifth sink apparatus such that power may be transferred from the fifth source apparatus to the fifth sink apparatus so as to actuate the flight control surface.

The sixth conduit 22 provides a hydraulic return associated with the fifth conduit 20. The sixth conduit 22 couples together a sixth source apparatus to a sixth sink apparatus. The sixth source apparatus is the hydraulic actuator onboard the second aircraft 3. The sixth sink apparatus is reservoir of hydraulic fluid, or a hydraulic pump of the second aircraft 3. In this embodiment, the sixth conduit 22 contains hydraulic fluid and couples together the sixth source apparatus and the sixth sink apparatus hydraulic fluid may be transferred from the sixth source apparatus to the sixth sink apparatus.

The seventh conduit 24 couples together a seventh source apparatus to a seventh sink apparatus. The seventh source apparatus is an engine onboard the second aircraft 3. The seventh sink apparatus is a gas outlet or exhaust of the second aircraft 3. In this embodiment, the seventh conduit 22 couples together the seventh source apparatus and the seventh sink apparatus such that a fluid, such as exhaust gasses or vent air, flows through the seventh conduit 22 from the seventh source apparatus to the seventh sink apparatus.

In some embodiments, one or more of the conduits 12 - 24 of the conduit system 10 includes a valve, a switch, or any other device for controlling the transfer of a resource (e.g. the flow of a fluid or the passage of an electrical signal) through that conduit 12 - 24.

Thus, an embodiment of a conduit system is provided.

In this embodiment, the conduit system 10 is a single object or item. However, in other embodiments, the conduit system comprises multiple sections, each of which may be produced by performing an appropriate AM process, and which may be attached together so as to form the conduit system.

The above described conduit system 10 tends to have a relative complex shape compared to prior art conduits. What will now be described is an embodiment of a process of producing the conduit system 10.

Figure 4 is a process flow chart showing certain steps of an embodiment of a process of producing the conduit system 10.

At step s2, a digital model of at least part of the second aircraft 3 is provided in such a way that this digital model may be manipulated and edited by a human operator using a computer.

In this embodiment, the digital model of the second aircraft 3 includes digital representations of the source apparatuses 4 and sink apparatuses 6. In other words, the digital model of the second aircraft 3 specifies relative locations of the source apparatuses 4 and sink apparatuses 6 onboard the second aircraft 3. The digital model of the second aircraft 3 may further specify other aircraft systems. Source apparatuses 4 and sink apparatuses 6 that are to be coupled together via conduits may be coupled together schematically in the digital model of the second aircraft 3 by digital conduits. At this stage, the digital conduits may be separate, independent digital conduits.

At step s4, a human operator updates or modifies the provided digital model of the second aircraft 3 to consolidate the digital conduits so as to form a single digital assembly (i.e. a digital representation of the conduit system 10) assembly. In other words, some or all of the digital conduits within the digital model of the second aircraft 3 are nested or combined together, thereby producing a digital representation of the conduit system 10.

In some embodiments, the consolidation of the digital conduits may be performed such that adverse effects on the contents of one conduit caused by the contents of a different conduit are minimised. For example, conduits through which electrical wiring passes (e.g. the first conduit 12 which houses electrical wiring) may be located as far away as possible from a conduit through which a hot fluid passes (e.g. the seventh conduit 24 through which relative hot exhaust gases travels) so as to minimise the heating of the electrical wiring by the hot fluid. Similarly, the consolidation of the digital conduits may be performed such that beneficial effects on the contents of one conduit caused by the contents of a different conduit are maximised. For example, conduits through which electrical wiring passes (e.g. the first conduit 12 which houses electrical wiring) may be located adjacent to a conduit through which a relatively a cool fluid passes (e.g. the second conduit 14 through which relative cool cooling air travels) so as to provide cooling of the electrical wiring by the cool fluid.

In some embodiments, the consolidation of the digital conduits is performed such that the cross sectional area of the conduit system 10 is substantially minimised. Thus, the volumetric space in the second aircraft 3 taken up by the conduit system 10 tends to be reduced. In other embodiments, the consolidation of the digital conduits is performed such that one or more different criteria are satisfied instead of or in addition to the minimal cross sectional area criterion. For example, the conduit system 10 may be designed so as to have a cross section having a predetermined shape, or such that the conduit system 10 has a strength or stiffness above a predetermined threshold.

In some embodiments, the consolidation of the digital conduits is performed such that the cross section of one or more of the conduits 12 -24 satisfies one or more predetermined criteria. For example, in some embodiments, a conduit 12-24 is required to have a cross sectional area larger than a predetermined threshold value. In some embodiments, a conduit 12-24 is required to have a cross sectional area smaller than a predetermined threshold value. In some embodiments, a conduit 12-24 is required to have a cross section that is a certain shape, e.g., circular.

In some embodiments, the consolidation of the digital conduits, i.e. the design of the conduit system 10, may be performed by one or more computers instead of or in addition to by the human operator. A computer may, for example, perform an optimisation process to determine an optimised conduit system.

At step s6, a digital model of the conduit system 10 is produced.

At step s8, AM apparatus fabricates the conduit system 10 using the digital model. AM processes, especially powder bed fusion AM processes, tend to be particularly well suited to manufacturing complex structures such as embodiments of the conduit system 10.

In this embodiment, the conduit system 10 includes all of the conduits 12 - 24 between the source apparatuses 4 and the sink apparatuses 6 onboard the second aircraft 3. Thus, the manufacture of the conduit system 10 is not initiated until all of the conduits 12- 24 are fully specified in a digital model. This tends to be in contrast to conventional methods in which conduits tend to be designed and fabricated independently.

Thus, a process of producing the conduit system 10 is provided.

What will now be described are an example AM apparatus and an AM process for producing the conduit system 10.

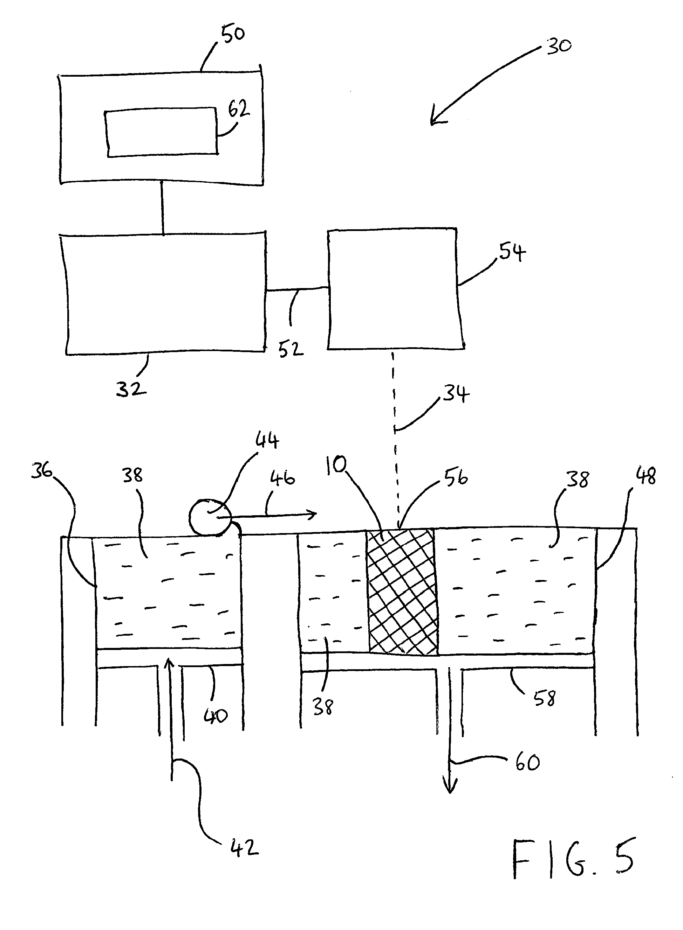

Figure 5 is a schematic illustration (not to scale) showing example Additive Manufacturing apparatus 30 that is used in an embodiment of a process of producing the conduit system 10.

In this embodiment, the AM apparatus 30 is apparatus for performing a powder bed AM processes. However, in other embodiments, a different type of AM apparatus is used produce the conduit system 10, e.g. by performing a different type of AM process. Examples of AM processes that may be used in other embodiments include, but are not limited to, Material Extrusion processes, Material Jetting processes, Binder Jetting processes, Sheet lamination processes, Vat Photo-polymerisation processes, Powder bed fusion processes, and Directed Energy Deposition processes.

In this embodiment, the AM apparatus 30 comprises a heat source in the form of a laser source 32 configured to produce a high powered laser beam 34. The laser source 32 may be any appropriate type of laser source, e.g. a laser source that is configured to have a continuous wave power output of 500W.

The AM apparatus 30 further comprises a powder repository 36 (or powder bed) containing an amount of metallic powder 38. The metallic powder 38 is a titanium alloy powder. In other embodiments, a different type of material (e.g. a ceramic powder or a different type of metallic power such as a steel powder, a nickel-based alloy powder, an aluminium alloy powder, or a copper powder) may be used.

In operation, a first piston 40 (that is located at the bottom of the first repository 36) is raised (in the direction indicated by an arrow in Figure 3 and the reference numeral 42) so as to raise an amount of the powder 38 above a top level of the first repository 36. A roller 44 is then rolled (in the direction indicated by an arrow in Figure 3 and the reference numeral 46) over the upper surface of the first repository 36 and across an upper surface of a second repository 48. This is performed so that the metallic powder 38 that was raised above the level of the first repository 36 by the raising of the first piston 40 is spread over an upper surface of the second repository 48. Thus, a top surface of the contents of the second repository 48 is covered by a layer of the metallic powder 38. In other embodiments, a different means of spreading the metallic powder 38 across a top surface of the contents of the second repository 48, such as a wiper, may be used instead of or in addition to the roller 44.

After a layer of the metallic powder 38 has been spread across a top surface of the contents of the second repository 48, the laser source 32 is controlled by a computer 50 to deliver the laser beam 34 via an optical fibre 52 to focussing optics 54. The focussing optics focus the laser beam 34 to a focal point 56 on the layer of metallic powder 38 that has been spread across a top surface of the contents of the second repository 48. The laser beam 34 melts a portion of the layer of metallic powder 38 onto which the laser beam 34 is focussed.

In this embodiment, the metallic powder 38 onto which the laser beam 34 is focussed is fully melted by the laser beam 34 and subsequently allowed to cool so as to form a layer of solid material. A second piston 58, located at the bottom of the second repository 48 is then lowered (i.e. moved in a direction indicated in Figure 3 by a solid arrow and the reference numeral 60) to allow for a further layer of metallic powder 38 to be spread by the roller 44 across the top surface of the contents of the second repository 48 (and subsequently melted and allowed to solidify).

Many layers of material are laid on top of one another (in accordance with a digital model 62 for the conduit system 10 stored by the computer 50) to produce the conduit system 10.

In this embodiment, the laser source 32 and focussing optics 54 are moveable under the control of the computer 50 in an X-Y plane that is parallel to the top surface of the contents of the second repository 48. Thus, the laser focal point 56 may be directed to any point in a working envelope in the X-Y plane so that layers of material of a desired shape may be deposited.

Thus, AM apparatus 30 for producing the conduit system 10 is provided.

The installation of the conduit system into an aircraft tends to be relatively simple compared to installing multiple independent and completely separate conduits onto the aircraft. This tends to be at least in part due to a reduced number of parts that have to be installed.

The conduit system tends to be composed to fewer parts than multiple independent conduits. Also, there tends to be fewer production steps involved in the manufacture of the conduit system compared to the number involved in the manufacture of multiple independent conduits. Thus, manufacturing time and cost may be reduced. Furthermore, the likelihood of a defect being present tends to be reduced.

The design of the conduit system may take into account available space onboard the aircraft. For example, the shape of the cross section of the conduit system may change along the length of the conduit system to account for changes in available space or other factors (e.g. proximity of the conduit system to other aircraft systems). Also, the conduit system may be designed to fit within space onboard the aircraft that would otherwise be unused. For example, the conduit system may be designed to fit along edges of an aircraft bay, thereby an increased amount of central bay space which may be used, e.g. for the transportation of goods.

The conduit system may include a number of bends or curves. This tends to provide that the conduit system has a degree of flexibility so that tensile loading of the conduit system (for example, caused by aircraft flexing and movement) causes an allowed small distortion to the shape of the conduit system, thereby reducing a force exerted on interface joints of the conduit system. Thus, a risk of damage to the interface joints tends to be reduced.

The conduit system may advantageously be designed such that it is conformal with or embedded within, for example, an aircraft access panel, a bulkhead, part of the aircraft fuselage, etc.

The above described methods and apparatus tends to facilitate in the production of a conduit system, conduits of which may have different wall thicknesses. This advantageously tends to facilitate in the thermal or electrical isolating of the contents of one conduit from the contents of another conduit. Also, one or more of the conduits of the conduit system may have a variable wall thickness along its length. Also, a conduit of the conduit system may have a cross section that varies in size and/or shape along the conduit length. Thus, fluid pressure may vary along the length of a conduit.

The above described methods and apparatus tends to facilitate in the production of a conduit system that includes conduits that have complex shapes/cross sections (e.g. a non-round cross section). A conduit may include braces or other structures to strength the walls of that conduit.

In some embodiments, a conduit containing a vacuum, a partial vacuum, or a thermally insulating material may be included in the conduit system, for example, at least partially surrounding a different conduit. This advantageously tends to facilitate in the isolating of the contents of one conduit from the contents of another conduit.

The above described methods and apparatus tend to facilitate in the production of a conduit system in which conduits merge, converge, diverge, and pass through one another.

The above described methods and apparatus tends to facilitate in the production of multiplex (e.g. duplex systems). For example, the conduit system may include multiple routings for a fluid so that if one routing is damaged, an alternative routing for that fluid may be used.

The conduit system advantageously tends to occupy a smaller volume onboard the aircraft than multiple independent conduits. This advantageously tends to facilitate in the production of smaller, lighter, cheaper, and/or more efficient aircraft.

Using the above described conduit system, a smaller amount of access space onboard the aircraft (for example, to allow for installation, replacement or repair of the conduit system) tends to be required compared to the amount of space that is allowed when using multiple independent conduits.

The conduit system tends to be stiffer than a single conduit. This tends to be at least in part due to the close packing and tessellation of the conduits of the conduit system. Thus, the conduit system tends to require fewer attachment/anchor points to be installed in an aircraft compared to independent conduits. This tends to reduce weight, cost and installation time.

Many of the conduits of the conduit system share common conduit walls. Thus, the amount of material that is used to construct the conduit system tends to be reduced compared to the amount used to construct multiple independent conduits. This tends to reduce weight and cost.

The conduit system may be built, e.g. using an AM process, as a single component. Furthermore, it may be possible to manufacture at least part of an aircraft fuselage with an integral conduit system as a single component, for example, using an AM process.

The conduit system tends to provide for an improved flow of fluids. For example, the inclusion of features such as flow separators, lower curvatures bends etc. tend to be facilitated.

The above described method and apparatus may be used to produce apparatus in which the conduit system is integral, for example, a bulkhead, shear web structure or a firewall.

Apparatus, including the computer, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figure 4 and described above may be omitted or such process steps may be performed in differing order to that presented above and shown in Figure 4. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the conduit system may be substantially straight, or may include one or more bends or curves. The conduit system may have any appropriate shape. The conduit system may comprise a plurality of branches such that fluid flow may be split amongst a plurality of different conduits. The conduit system may include one or more valves for controlling fluid flow through the conduit system. AM process, such as those described above, tend to be particularly well suited to manufacturing complex structures such as embodiments of the conduit system that have relatively complex shapes and/or include one or more valves.

In the above embodiments, the conduit system is produced using a powder bed fusion AM process. Such processes tend to be particularly well suited to manufacturing complex structures such as embodiments of the conduit system that have relatively complex shapes and/or include one or more valves. However, in other embodiment, the conduit system is produced using a different type of process e.g. a different AM process. For example, a blown powder AM process may be used.

In some embodiments, one or more conduit systems are joined together.

In the above embodiments, the conduit system comprises seven conduits as described in more details earlier above with reference to Figure 3. However, in other embodiments, the conduit system comprises a different number of conduits. At least two of these conduits may share a common conduit wall. Also, in other embodiments, one or more conduits of the conduit system may house, guide, or contain, or be used to transfer a different type of resource to those described above with reference to Figures 3. In some embodiments, the cross section of the conduit system may be different to that described earlier above and shown in Figure 3. The conduit system may have any appropriate cross sectional area.

In some embodiments, a wall of the conduit system such as an internal wall of one or more of the conduits of the conduit system are silvered or mirrored to reflect heat. Such a silvered surface may be deposited during the AM process. Alternatively, for example, after the conduit system has been produced, a reflective coating may be applied to a wall of the conduit system, or internal walls of the conduit system may be processed (e.g. chemically machined, acid etched, or processed using an energised abrasive slurry) so as to make the internal surface of the chamber more reflective.

In the above embodiments, the conduit system is implemented onboard an aircraft, for example, unmanned aircraft. However, in other embodiments, the conduit system is implemented on a different type of entity, for example, a different type of vehicle such as a land-based or water-based vehicle (such as a submersible vehicle). In other embodiments, the conduit system may be used to couple any number source apparatuses to any number of sink apparatuses. In some embodiments, more than one source apparatus is coupled by the conduit system to a single sink apparatus. Similarly, more than one sink apparatus is coupled by the conduit system to a source sink apparatus.

## Claims

1. A method of producing a conduit system (10) for use onboard a vehicle (3), the method comprising:
identifying a plurality of source apparatuses (4), each source apparatus (4) being apparatus from which a respective resource is to be transferred via the conduit system (10), each source apparatus (4) being located onboard the vehicle (3);
for each identified source apparatus (4), identifying one or more sink apparatuses (6) to which that source apparatus (4) is to be coupled via the conduit system (10) such that a resource may be transferred via the conduit system (10) from that source apparatus (4) to those one or more sink apparatuses (6), each sink apparatus (6) being located onboard the vehicle (3);
using relative locations of the identified source and sink apparatuses, producing a digital model (62) for the conduit system (10), producing the digital model (62) including:
for each source apparatus (4), specifying a conduit (12-24) of the conduit system (10) for coupling that source apparatus (4) to each of the one or more sink apparatuses (6) to which that source apparatus (4) is to be coupled; and
arranging the conduits (12-24) in a nested configuration such that at least part of each conduit (12-24) shares a common conduit wall with at least part of at least one other conduit (12-24); and
using the digital model (62), producing the conduit system (10).

2. A method according to claim 1 wherein the conduit system (10) is a single object.

3. A method according to claim 1 or 2, wherein the step of producing comprises performing, by an Additive Manufacturing apparatus (30), an Additive Manufacturing process to produce the conduit system (10).

4. A method according to claim 3, wherein the Additive Manufacturing process is a powder bed fusion process.

5. A method according to any of claims 3 or 4, wherein one or more of the conduits (12-24) includes a valve, the valve being produced by the Additive Manufacturing apparatus (30) during the Additive Manufacturing process.

6. A method according to any of claims 1 to 5, the method further comprises coupling the conduit system (10) to the source apparatuses (4) and the sink apparatuses (6) such that, for each source apparatus (4), a resource may be transferred via the conduit system (10) from that source apparatus (4) to the one or more sink apparatuses (6) coupled to that source apparatus (4).

7. A method according to any of claims 1 to 6, wherein the vehicle (3) is an aircraft and each of the source apparatuses (4) and each of the sink apparatuses (6) is an aircraft system onboard the aircraft.

8. A method according to any of claims 1 to 7, wherein the conduit system (10) is such that the cross section of the conduit system (10) satisfies a first predetermined criterion.

9. A method according to claim 8, wherein the first predetermined criterion is that the cross sectional area of the conduit system (10) is minimised.

10. A method according to any of claims 1 to 9, wherein the conduit system (10) is such that the cross section of one or more of the conduits (12-24) of the conduit system (10) satisfies a second predetermined criterion.

11. A method according to any of claims 1 to 10, wherein producing the digital model (62) further includes arranging the conduits (12-24) such that a criterion selected from a group of criteria is satisfied, the group of criteria consisting of:
a criterion that heating of the contents of one conduit (12-24) by the contents of a different conduit (12-24) is minimised;
a criterion that cooling of the contents of one conduit (12-24) by the contents of a different conduit (12-24) is minimised;
a criterion that heating of the contents of one conduit (12-24) by the contents of a different conduit (12-24) is maximised;
a criterion that cooling of the contents of one conduit (12-24) by the contents of a different conduit (12-24) is maximised.

12. A method according to any of claims 1 to 11, wherein producing the digital model (62) further includes arranging the conduits (12-24) such that the cross sections of the conduits (12-24) tessellate.

13. A method according to any of claims 1 to 12, wherein each conduit (12-24) of the conduit system (10) is selected from the group of conduits consisting of: a conduit configured to house electrical wiring via which an electrical signal may be sent from a source system to a sink system; a conduit configured to house an optical fibre via which an optical signal may be sent from a source system to a sink system; a conduit configured to contain hydraulic fluid for transferring power from a source system to a sink system; and a conduit configured to allow passage of a fluid from a source system to a sink system.

14. Apparatus for producing a conduit system (10) for use onboard a vehicle (3), the apparatus comprising:
one or more processors configured to:
receive an identity of each of a plurality of source apparatuses (4), each source apparatus (4) being apparatus from which a respective resource is to be transferred via the conduit system (10), each source apparatus (4) being located onboard the vehicle (3);
for each identified source apparatus (4), receive an identity of one or more sink apparatuses (6) to which that source apparatus (4) is to be coupled via the conduit system (10) such that a resource may be transferred via the conduit system (10) from that source apparatus (4) to those one or more sink apparatuses (6), each sink apparatus (6) being located onboard the vehicle (3); and
using relative locations of the identified source and sink apparatuses, producing a digital model (62) for the conduit system (10), producing the digital model (62) including:
for each source apparatus (4), specifying a conduit (12-24) for coupling that source apparatus (4) to each of the one or more sink apparatuses (6) to which that source apparatus (4) is to be coupled; and
arranging the conduits (12-24) of the conduit system (10) in a nested configuration such that at least part of each conduit (12-24) shares a common conduit wall with at least part of at least one other conduit (12-24); and
production means (30) configured to, using the digital model (62), producing the conduit system (10).

15. A conduit system (10) for use onboard a vehicle (3) comprising:
a plurality of conduits (12-24), each conduit (12-24) being for transferring a resource from one or more source apparatuses (4) to one or more sink apparatuses (6), each source apparatus (4) being located onboard the vehicle (3), each sink apparatus (6) being located onboard the vehicle (3); wherein
the conduits (12-24) of the conduit system (10) are nested together such that at least part of each conduit (12-24) of the conduit system (10) shares a common conduit wall with at least part of at least one other conduit (12-24) of the conduit system (10); and
the conduit system (10) is an object that has been produced by an Additive Manufacturing apparatus (30) by performing an Additive Manufacturing process.
